# EUROPEAN PATENT APPLICATION

(11) **EP 0 796 563 A2**
(43) Date of publication of application: **24.09.1997**
(21) Application number: 97830105.9
(22) Date of filing: 11.03.1997
(51) Int. Cl.: A23G 1/10, A23G 1/12

(54) **Semi-continuous and continuous system for mixing, homogenizing and refining chocolate, glazings and creams in general**

(30) Priority: 18.03.1996 IT MI960533
(71) Applicant: VITALI S.p.A., I-22049 Valmadrera (Como) (IT)
(72) Inventor: Vitali, Antonio, 22049 Valmadrera (Lecco) (IT)
(74) Representative: Cicogna, Franco

(57) **Abstract**

The present invention relates to a semi-continuous and continuous system for mixing, homogenizing, refining and potting chocolate, succedanea, glazings and creams in general, which comprises a vertical pre-mixer for pre-mixing the raw materials, the pre-mixer being arranged above a high speed planetary mixer for homogenizing and aerating the product, including a stirrer rotating with a rotary speed greater than that of the stirrer of the pre-mixer; downstream of the mixer being provided a ball refining mill, including at least two portions with counter-rotating balls, the balls having a different diameter; from the mill extending a recycling duct, interconnected at least to the mixer, and a discharging duct.

## Description

### BACKGROUND OF THE INVENTION

The present invention relates to a semi-continuous and continuous system for mixing, homogenizing, refining and potting chocolate, succedanea, glazings and creams in general.

As is known, conventional systems for processing cocoa-based confectionery products usually comprise a processing system including refining devices as well as a plurality of processing pots, so as to provide a substantially continuous system; a continuous type of processing system, on the other hand, provides a confectionery product having not fully satisfactory properties.

Actually, the conventional confectionery product processing system substantially provides to arrange on-line, downstream of the refining device/ refining devices, a plurality of pots, to provide a substantially continuous supply of the confectionery product to the downstream equipment, since the related processing technology provides that the product, i.e. chocolate, be mixed for twelve or more hours and, accordingly, the product present in a pot can not be discharged before the preset processing time; then, it is necessary to provide a plurality of chocolate processing pots, which allows to make the processing treatment substantially continuous.

A modified chocolate processing system comprises, essentially, a double mixer, which is coupled to ball mills, for performing pre-refining and refining operations, and also including a vacuum unit for processing the product under a vacuum and at a temperature of 70-90°C, to provide a processing substitutive of the most conventional "potting" process.

This latter system, which can be a substantially continuous system, is affected by limitations mainly related to lackness of evenness of the particle size of the product being obtained, and it has the further drawback that it can not provide an even viscosity like that provided by a potting process, i.e. a process in which the chocolate material is processed in a plurality of so-called "pots".

### SUMMARY OF THE INVENTION

Accordingly, the aim of the present invention is to overcome the above mentioned drawbacks, by providing a semi-continuous and continuous system which allows to optimize the quality of the obtained product, while simplifying the processing steps the product is subjected to.

Within the scope of the above mentioned aim, a main object of the present invention is to provide such a processing system which allows to perform an even product refining process, while preventing the product from being channeled toward preferential processing paths.

Another object of the present invention is to provide such a semi-continuous and continuous system which, owing to its specifically designed constructional features, is very reliable and safe in operation.

Yet another object of the present invention is to provide such a chocolate processing system which can be easily made starting from easily commercially available elements and materials and which, moreover, is very competitive from an operation cost standpoint.

According to one aspect of the present invention, the above mentioned aim and objects, as well as yet other objects, which will become more apparent hereinafter, are achieved by a semi-continuous and continuous system for mixing, homogenizing, refining and potting chocolate, succedanea, glazings and creams in general, characterized in that said system comprises a vertical pre-mixer for pre-mixing raw materials, said pre-mixer being arranged above a high speed planetary mixer for homogenizing and aerating the product, said mixer including a rotary stirrer rotating with a rotary speed greater than that of a corresponding stirrer of said pre-mixer; downstream of said mixer a ball refining mill being provided, which includes at least two mill portions comprising counter-rotating balls of different diameters, from said mill projecting a recycling duct, interconnected at least to said mixer and to a product discharging duct.

### BRIEF DESCRIPTION OF THE DRAWINGS

Further characteristics and advantages of the system according to the present invention will become more apparent hereinafter from the following detailed disclosure of two preferred, though not exclusive, embodiments of a system for mixing, homogenizing, refining and potting chocolate, succedanea, glazings and creams in general, being illustrated, by way of an indicative, but not limitative example, in the accompanying drawings, where:
Figure 1 is a schematic elevation view illustrating a semi-continuous system;
Figure 2 is a top plan view illustrating that same semi-continuous system;
Figure 3 is an elevation view illustrating a continuous type of system;
Figure 4 is a top plan view illustrating a continuous type of system;
Figure 5 is a detail view illustrating the vertical pre-mixer and the high-speed mixer included in the system according to the present invention;
Figure 6 illustrates the refining mill included in the system according to the invention; and
Figure 7 illustrates a vacuum mixer also included in the system according to the invention.

### DESCRIPTION OF THE PREFERRED EMBODIMENTS

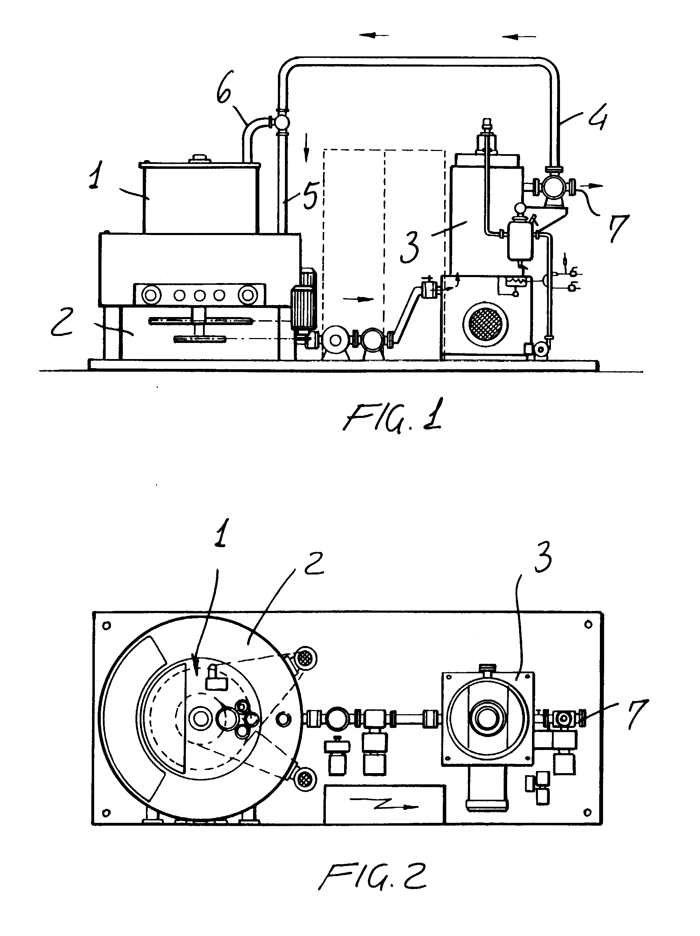

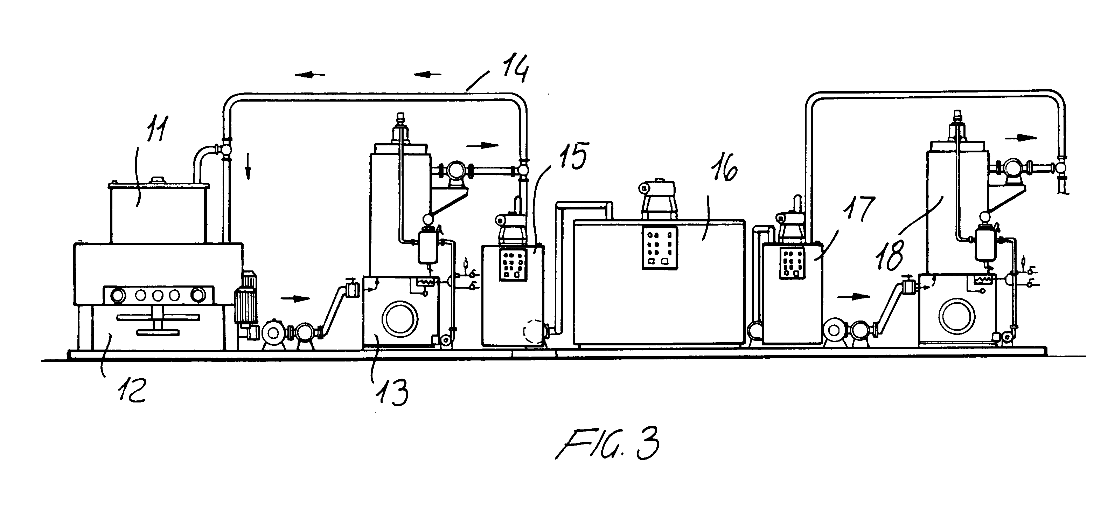

With reference to the number references of the above mentioned drawing figures, and, more specifically, to figures 1 and 2, the semi-continuous and continuous system for mixing, homogenizing, refining and potting chocolate, succedanea, glazings and creams in general according to the present invention comprises a vertical pre-mixer 1, for mixing the several raw materials to be processed, into which are at first introduced liquid raw materials such as cocoa butter, and/or cocoa liquor, and hence being introduced solid raw materials such as powder milk, sugar and the like.

The vertical pre-mixer 1 will so operate as to properly amalgamate the several components of the recipe and being provided with a stirrer driven with a rotary speed of 18 to 22 RPM's, with an adjustment possibility, so as to allow to properly mix even products with a small fat contents.

The mixing time of this vertical pre-mixer will be controlled and/or adjusted depending on the user and recipe requirements.

At the end of the pre-mixing operation, the product being processed is sent to the underlaying high speed mixer, indicated by the reference number 2, which has a larger diameter to provide a satisfactory aeration and homogenizing of the product, in which the product is processed on a larger specific surface and with a high peripheral speed, which is obtained by using a stirrer driven at a rotary speed, preferably an adjustable rotary speed, of about 80 RPM's.

The holding time of the product in the high speed mixer can be properly programmed and adjusted from 15 to 60 minutes, and, after this holding time, the product will be sent to a refining mill 3, which will be disclosed in a more detailed manner hereinafter.

The refining mill, in particular, is coupled to a recycling duct 4 for reintroducing, according to programmed cycles, the product being processed into the high speed mixer 2 or into the pre-mixer, through branched ducts 5 or 6.

Moreover, the refining mill is also provided with an outlet or discharging duct 7 for sending the product to further processing operations.

The ball refining mill which, as stated, will be disclosed in a more detailed manner hereinafter, has the main feature that it comprises at least two mill portions including counter-rotating balls of different diameters, so as to cause the product to be subjected to a twisting and rotary opposite action, thereby passing from a mill portion to the other, while providing a very good and even refining of the product, and preventing said product from being channeled in preferential processing paths.

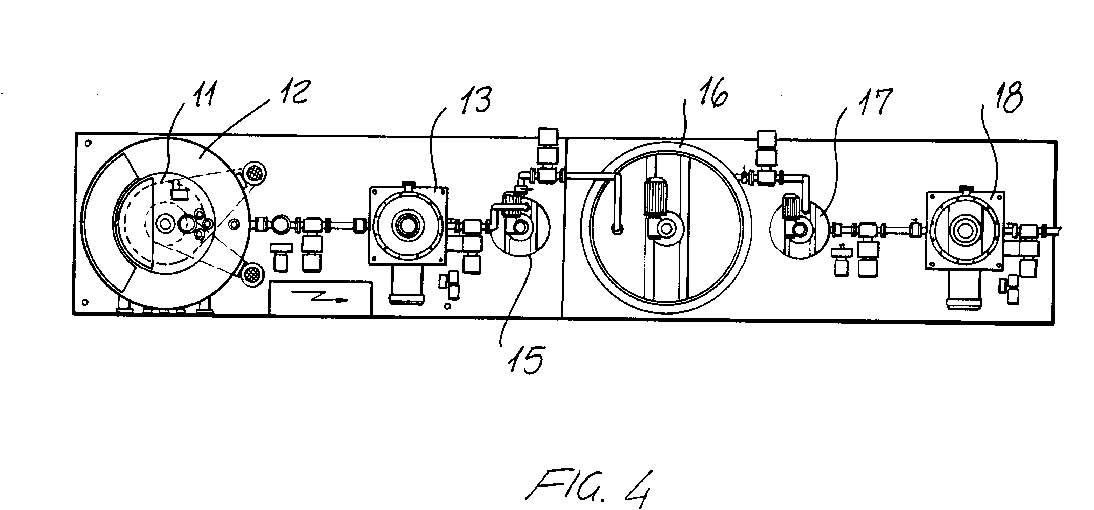

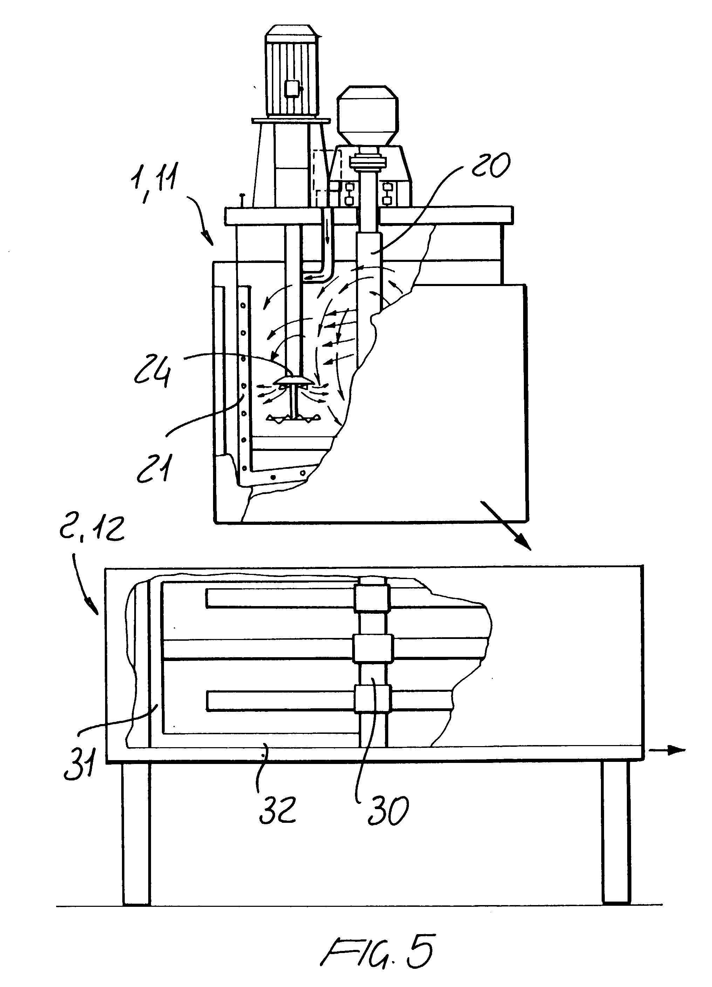

With reference to figures 3 and 4, a continuous processing system will be hereinbelow disclosed which comprises a vertical pre-mixer 11, having characteristics similar to those of the mixer 1, which is arranged above a high speed mixer 12, which is coupled to a pre-refining mill 13 which is in turn coupled to a recycling duct 14.

If desired, a product plasticizing device can also be provided, for example of the screw plasticizing type, the outlet of which will be coupled to a die having a plurality of set diameter holes, which will be set depending on the characteristics of the product to be obtained.

The mentioned product plasticizing device will operate so as to properly amalgamate the product and reduce the viscosity of products having a small free fat contents, so as to properly supply the thus processed product to the pre-refining mill 13.

The product exiting the pre-refining mill 13 will be sent to a plenum tank 15, which will operate so as to make constant the product supply to the downstream equipment, and so as to properly receive and homogenize possible fat additives which can be added by the user to the main recipe.

Downstream of the plenum tank 15 a vacuum mixer 16 is provided which will operate to provide the desired features of the product and which will provide, under vacuum, processing steps which can perfectly simulate the potting steps at a temperature of 70-90°C.

The vacuum mixer 16, which will be disclosed in a more detailed manner hereinafter, is connected to a further tank 17 receiving from the vacuum mixer 16 only that product amount which is necessary to supply the end refining mill 18, provided for performing a final refining of the product, to provide the desired or set product particle size.

This vacuum mixer comprises, in particular, two layers of different diameter balls, which are turned in opposite rotary directions, thereby properly twisting the product while preventing preferential processing paths from being formed.

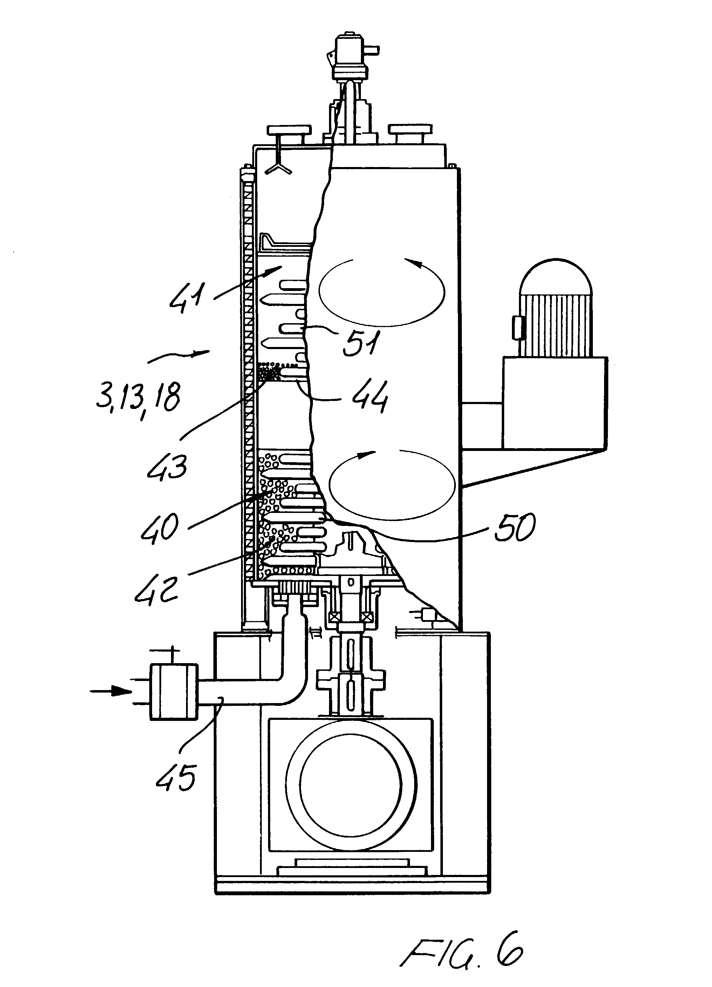

With reference to the number references of figure 5, the pre-mixer 1, 11 is provided with a central stirrer 20, which is driven at a rotary speed of 18 to 22 RPM's, and including a wall scraper 21 and a bottom scraper 22, as well as a cowless disc dispersor which, by rotating with a rotary speed of about 1,400 RPM's, will cause the product components to be quickly homogenized.

As shown, the pre-mixer is coupled, by a lobe pump, to the high speed planetary mixer 2, 12 which comprises a high speed stirrer 30, of the arm type, which is connected to a wall scraper 31 and a bottom scraper 32.

The high speed mixer will also operate as a product recycling chamber; in fact, at the end of the homogenizing operation, a pump will start to transfer chocolate to the refining mill, and the product can be recycled, through the top mixer, and then further recycled to the bottom mixer.

In the meanwhile, as the product in the top pre-mixer is exhausted, said pre-mixer can start the raw material loading step and then the mixing step proper, while the bottom mixer will homogenize and recycle the preceding product.

The product, sent to the refining mill, which has been subjected to a first refining operation, will return to the high speed mixer and a number of recycling steps will be performed corresponding to those programmed by the user depending on the organoleptic characteristics to be obtained in the end product.

At the end of the recycling operation by the high speed mixer, with the refined product being stored in the storing tank, the bottom high speed mixer will receive from the top mixer a further amount of already processed product, thereby providing a semi-continuous type of operation.

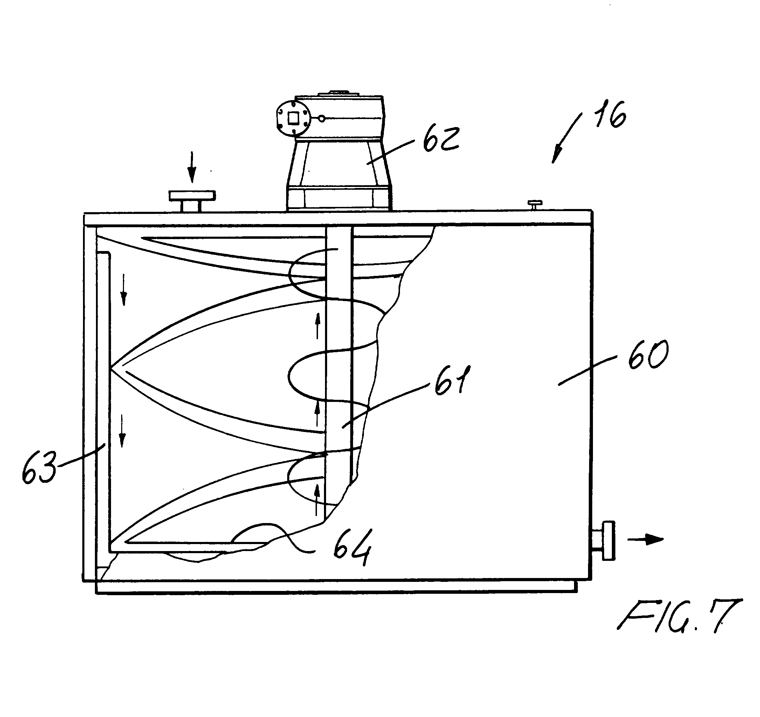

The ball refining mill 3, 12 and 18, which is shown in figure 6, comprises at least two mill portions, i.e. a bottom mill portion 40 and a top mill portion 41, including different diameter balls 42 and 43.

The top mill portion, more specifically, will held smaller balls and being separated from the bottom mill portion by a perforated grid 44 which will hold the ball thereon while allowing the ground product to pass therethrough, thereby the product will be always held under mixing and stirring conditions, and being introduced from the bottom through a bottom duct 45.

The product, in particular, will tend to move upward from the bottom mill portion to the top mill portion under the effect of the driving force provided by the loading lobe pumps and by the arm stirrers 50 and 51, which are counter-rotating, and will subject the product to an opposite rotary twisting action, to provide a very good and even refining, without generating preferential processing paths.

The vacuum mixer 16, shown in figure 7, substantially comprises a vessel 60 which is held in an under vacuum condition and is heated to temperatures from 70°C to 90°C.

Inside the vessel 60 is arranged a mixing blade 61, driven by a reducing motor unit 62, which is coupled to a wall scraper 63 and a bottom scraper 64.

The vacuum mixer, which has preferably a holding volume of 2,500 litres, will provide a processing of the product analogous to a potting processing, at a temperature from 70°C to 90°C, the vacuum allowing to remove residual acidity and volatile moisture.

The large size stirring blades will provide a very satisfactory processing of the product, which will be held in this mixer for about 5 hours, while allowing the user to adjust at will the product holding time.

From the above disclosure it should be apparent that the invention fully achieves the intended aim and objects.

In particular, it is to be pointed out that a semi-continuous and continuous systems have been provided which allow to optimize the processing steps on chocolate and the like products.

The invention, as disclosed, is susceptible to several modifications and variations, all of which will come within the inventive idea scope.

Moreover, all of the details can be replaced by other technically equivalent elements.

In practicing the invention, the used materials, provided that they are compatible to the intended application, as well as the contingent size and shapes, can be any, depending on requirements.

## Claims

1. A semi-continuous system for mixing. homogenizing, refining and potting chocolate, succedanea, glazings and creams in general, characterized in that said system comprises a vertical pre-mixer for pre-mixing raw materials, said pre-mixer being arranged above a high speed planetary mixer for homogenizing and aerating the product, said mixer including a rotary stirrer rotating with a rotary speed greater than that of a corresponding stirrer of said pre-mixer; downstream of said mixer a ball refining mill being provided, which includes at least two mill portions comprising counter-rotating balls of different diameters, from said mill projecting a recycling duct, interconnected at least to said mixer and to a product discharging duct.

2. A continuous system for mixing, homogenizing, refining and potting chocolate, succedanea, glazings and creams in general, characterized in that said system comprises a vertical pre-mixer for pre-mixing the raw materials, arranged above a high speed planetary mixer for homogenizing and aerating the product being processed, and including a rotary stirrer rotating with a rotary speed greater than that of the stirrer of said pre-mixer; downstream of said mixer being provided a ball pre-refining mill, including at least two mill portions with different diameter counter-rotatng balls; said pre-refining mill being coupled to a first storing tank, downstream of which a vacuum mixer is provided, said vacuum mixer being coupled to a second storing tank in turn communicating with a refining mill.

3. A continuous system, according to the preceding claim, characterized in that said system comprises moreover a product plasticizing device, arranged between the high speed planetary mixer and the pre-refining mill and including a plasticizing screw one end of which communicates with a die including set diameter holes.

4. A semi-continuous and continuous system, according to one or more of the preceding claims, characterized in that said raw material vertical pre-mixer is provided with a stirrer including a wall scraper and a bottom scraper, a lobe pump being moreover provided for sending the product from the pre-mixer to the high speed mixer.

5. A semi-continuous and continuous system, according to one or more of the preceding claims, characterized in that said system comprises, in said pre-mixer, a high speed rotary disc, for introducing said raw materials, and operating as a quick homogenizing device.

6. A semi-continuous and continuous system, according to one or more of the preceding claims, characterized in that said high speed mixer is axially provided with an arm stirrer, coupled to a wall scraper and to a bottom scraper.

7. A semi-continuous and continuous system, according to one or more of the preceding claims, characterized in that said ball refining mill is provided with a bottom mill portion and a top mill portion, in which are provided different diameter balls, in said mill portion an arm stirrer being moreover provided, said arm stirrer including counter-rotating arms of different lengths.

8. A semi-continuous and continuous system, according to one or more of the preceding claims, characterized in that said system comprises moreover, between said bottom and top mill portions, a perforated grid for holding the balls and allowing ground products to pass therethrough.

9. A semi-continuous and continuous system, according to one or more of the preceding claims, characterized in that said products being processed is introduced from the bottom into said refining mill by a lobe pump.

10. A semi-continuous and continuous system, according to one or more of the preceding claims, characterized in that said vacuum mixer comprises a vessel heated to a temperature from 70°C to 90°C and a stirrer included large blades and a wall scraper and a bottom scraper.

11. A semi-continuous and continuous system for mixing, homogenizing, refining and potting chocolate, succedanea, glazings and creams in general, according to one or more of the preceding claims, and substantially as broadly disclosed and illustrated for the intended objects.
